# EUROPEAN PATENT APPLICATION

(11) **EP 4 717 652 A1**
(43) Date of publication of application: **01.04.2026**
(21) Application number: 25203211.5
(22) Date of filing: 18.09.2025
(51) Int. Cl.: B66B 5/00

(54) **VIRTUAL SAFETY NET CONFIGURATION SYSTEM**

(30) Priority: 25.09.2024 US 202418896078
(71) Applicant: Otis Elevator Company, Farmington, Connecticut 06032 (US)
(72) Inventor: Auxier, James Tilsley, Farmington, CT 06032 (US); Moore, Kathleen Nicole, Farmington, CT 06032 (US); Roberts, Randall, Farmington, CT 06032 (US); Richter, Jesse R., Farmington, CT 06032 (US)
(74) Representative: Schmitt-Nilson Schraud Waibel Wohlfrom Patentanwälte Partnerschaft mbB

(57) **Abstract**

A virtual elevator safety net configuration system includes an active remote sensor configured to output energy within field of view (FOV) and to detect the energy reflected from an object located in the FOV, and one or more markers arranged within the FOV to define a spatial region of interest. The one or more markers are configured to reflect the energy having a first energy intensity to the active remote sensor. The virtual elevator safety net configuration system further includes a processor in signal communication with the active remote sensor. The processor is configured to determine the spatial region of interest within the FOV based at least in part on the reflected energy having a first energy intensity.

## Description

The present disclosure relates to elevator systems and, in particular, to a virtual safety net configuration system.

Conveyance systems such as elevators, escalators, etc., may have various hazard areas or zones (e.g., pinch points) that should be treated with safety, but still may require maintenance. In an elevator system, for example, a hoistway is built into a building and an elevator car travels up and down along the hoistway to arrive at landings of different floors of the building. The movement of the elevator is driven by a machine that is controlled by a controller according to instructions received from users of the elevator system. An elevator pit is the space between the hoistway's lowest landing door and the ground at the bottom of the hoistway. The elevator pit typically includes a concrete base slab and certain mechanisms of the elevator system and is typically bordered by four walls. The elevator pit can be accessed by authorized personnel (i.e., a service technician) via a pit ladder. The elevator car should generally be removed from the elevator pit and the elevator system should be non-operative while anyone is accessing the elevator pit, although there are some maintenance procedures requiring the elevator car to be moved while a mechanic is in the elevator pit.

According to a non-limiting embodiment, a virtual safety net configuration system includes an active remote sensor configured to output energy within field of view (FOV) and to detect the energy reflected from an object located in the FOV, and one or more markers arranged within the FOV to define a spatial region of interest. The one or more markers are configured to return the energy having a first energy intensity to the active remote sensor. The safety net configuration system further includes a processor in signal communication with the active remote sensor. The processor is configured to determine the spatial region of interest within the FOV based at least in part on the reflected energy having a first energy intensity.

Particular embodiments further may include at least one, or a plurality of, the following optional features, alone or in combination with each other:

In accordance with additional or alternative embodiments, locations of the markers are stored in memory accessible by the processor, and wherein the processor determines a profile of the spatial region of interest based on the locations stored in memory.

In accordance with additional or alternative embodiments, the processor disregards energy reflected from an object located outside the spatial region of interest, and performs a safety action in response to detecting energy reflected from an object located within the spatial region of interest.

In accordance with additional or alternative embodiments, the safety action includes one or both of generating an alert and activating an elevator safety chain.

In accordance with additional or alternative embodiments, the active remote sensor outputs the energy along a two-dimensional plane and the spatial region of interest is an area of interest (AOI) within the FOV of the active remote sensor.

In accordance with additional or alternative embodiments, the active remote sensor outputs the energy along a three-dimensional space and the spatial region of interest is an volume of interest (VOI) within the FOV of the active remote sensor.

In accordance with additional or alternative embodiments, the active remote sensor and the one or more markers are coupled to a pit ladder included in an elevator system. The one or more markers are configured to be maintained or removed after the locations of the markers are stored in the memory.

In accordance with additional or alternative embodiments, the pit ladder is located in the FOV, and wherein the one or more markers define the spatial region of interest that includes a targeted portion of the pit ladder.

In accordance with additional or alternative embodiments, the active remote sensor and the one or more markers are disposed in an elevator pit included in an elevator system.

In accordance with additional or alternative embodiments, the elevator pit is located in the FOV, and wherein the one or more markers define the spatial region of interest that includes a targeted portion of the elevator pit that is less than an entire portion of the elevator pit.

According to another non-limiting embodiment, a method of configuring a virtual safety net system using a safety net configuration system is provided. The method comprises arranging one or more markers within the FOV to define a spatial region of interest. The one or more markers are configured to reflect the energy having a first energy intensity to the active remote sensor. The method further comprises outputting from an active remote sensor energy within field of view (FOV), and detecting the energy reflected from an object located in the FOV. The method further comprises determining, by a processor in signal communication with the active remote sensor, the spatial region of interest within the FOV based at least in part on the reflected energy having a first energy intensity.

Particular embodiments further may include at least one, or a plurality of, the following optional features, alone or in combination with each other:

In accordance with additional or alternative embodiments, the method further comprises storing locations of the markers in memory accessible by the processor; and determining a profile of the spatial region of interest based on the locations stored in memory.

In accordance with additional or alternative embodiments, the method further comprises disregarding energy reflected from an object located outside the spatial region of interest; and performing a safety action in response to detecting energy reflected from an object located within the spatial region of interest.

In accordance with additional or alternative embodiments, the safety action includes one or both of generating an alert and activating an elevator safety chain.

In accordance with additional or alternative embodiments, the method further comprises outputting from the active remote sensor the energy along a two-dimensional plane such that the spatial region of interest is an area of interest (AOI) within the FOV of the active remote sensor.

In accordance with additional or alternative embodiments, the method further comprises outputting from the active remote sensor the energy along a three-dimensional space such that the spatial region of interest is an volume of interest (VOI) within the FOV of the active remote sensor.

In accordance with additional or alternative embodiments, the method further comprises coupling the active remote sensor and the one or more markers to at least one of a pit ladder, and elevator pit ladder, handrails located at a top of an elevator car, and a machine guarding area included in an elevator system.

In accordance with additional or alternative embodiments, the pit ladder is located in the FOV, and the one or more markers define the spatial region of interest that includes a targeted portion of the pit ladder.

In accordance with additional or alternative embodiments, the method further comprises disposing the active remote sensor and the one or more markers in an elevator pit included in an elevator system.

In accordance with additional or alternative embodiments, the elevator pit is located in the FOV, and wherein the one or more markers define the spatial region of interest that includes a targeted portion of the elevator pit that is less than an entire portion of the elevator pit

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

For a more complete understanding of this disclosure, reference is now made to the following brief description, taken in connection with the accompanying drawings and detailed description, wherein like reference numerals represent like parts:
FIG. 1 is a perspective view of an elevator system according to non-limiting embodiments;
FIG. 2 is a perspective view of an elevator pit included in the elevator system shown in FIG. 1 according to non-limiting embodiments;
FIG. 3A is a perspective view of a retroreflective elevator safety net configuration system for configuring an elevator pit ladder safety net system according to non-limiting embodiments;
FIG. 3B is a side view of the retroreflective elevator safety net configuration system shown in FIG. 3A according to non-limiting embodiments;
FIG. 3C is a front view of elevator pit ladder shown in FIGS. 3A and 3B following configuration of the elevator pit ladder safety net system according to non-limiting embodiments;
FIG. 4A is a perspective view of a retroreflective elevator safety net configuration system for configuring an elevator pit safety net system according to non-limiting embodiments;
FIG. 4B is a perspective view of the elevator pit shown in FIG. 4A following configuration of the elevator pit safety net system according to non-limiting embodiments; and
FIG. 5 is a flow diagram illustrating a method of configuring an elevator safety net system using a retroreflective elevator safety net configuration system according to non-limiting embodiments.

Conveyance systems such as elevators, escalators, moving walkways, etc., may include multiple monitors and sensors to monitor various parts, components and/or hazard areas. In elevator systems, for example, sensors may and monitors may be utilized to monitor the elevator pit, which service technicians and mechanics enter to perform maintenance and service tasks, and the pit ladder, which service technicians and mechanics use to access the elevator pit and to stand on during some operations. A cost-effective way of detecting a person, such as a service technician or a mechanic, standing in the elevator pit or on the pit ladder of an elevator system is therefore needed. Such a detection system needs to be easy to install and adjust and needs to require minimal service and maintenance. The detection system must also have high detection performance with low false positive and negative outcomes. In addition, when a detection system is installed, it is important that there be a verification process in place to ensure the detection system is operating properly and can be trusted to detect service technicians and mechanics in hazardous locations in the elevator pit and on the pit ladder. This verification process should be simple to initiate and use and effective to thereby provide installation personnel adequate data to allow them to confidently turn over the detection system.

Active remote sensor safety systems, sometimes referred to as a virtual safety net system, or when employed in an elevator system an "elevator safety net system", has recently been implemented to monitor critical areas of an elevator system such as, for example, the elevator pit, the elevator pit ladder, the handrails located at the top of the elevator car, and the machine guarding area within the machine room. The virtual safety net system includes one or more active remote sensors disposed at the critical areas of the elevator system to be monitored. When configuring the virtual safety net system, technicians may be required to manually measure out the dimensions of the area to monitor and then manually install and position the LiDAR sensors. An active remote sensor such as a Light Detection and Ranging (LiDAR) sensor, for example, is configured to output an energy signal (e.g., laser light) and to measure the intensity of the reflected energy that is reflected from an object on which the energy signal impinges. However, the installation of the LiDAR sensors is a potentially time-consuming task to ensure they are properly aligned. In addition, the manual installation may compromise the LiDAR sensors alignment accuracy and prevent the LiDAR sensor from accurately monitoring the area of interest.

Various non-limiting embodiments of the present disclosure provide a virtual elevator safety net configuration system. The virtual elevator safety net configuration system utilizes one or more markers such as retroreflective markers, which are utilized to configure the virtual safety net configuration system by confirming the alignment of the LiDAR sensors with respect to the target area of interest. During installation or maintenance of the virtual safety net system, for example, one or more retroreflective markers or other IR-emitting devices are affixed to the borders of a spatial region of interest such as, for example an area-of-interest (AOI) or volume of interest (VOI). The virtual safety net system control module can then be initiated into a configuration mode, which causes the control module to "window" or define the sensor field-of-view (FOV) in the software to so that the detection routine will only pay attention to the defined spatial region of interest (e.g., AOI) set during the configuration mode.

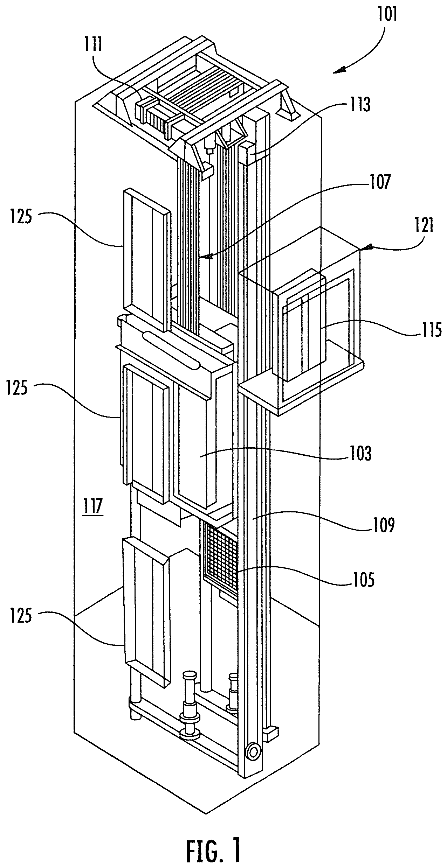

With reference to FIG. 1, which is a perspective view of an elevator system 101, the elevator system 101 includes an elevator car 103, a counterweight 105, a tension member 107, a guide rail 109, a machine 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network, etc.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

The elevator system 101 also includes one or more elevator doors 104. The elevator door 104 may be integrally attached to the elevator car 103 or the elevator door 104 may be located on a landing 125 of the elevator system 101, or both. Embodiments disclosed herein may be applicable to both an elevator door 104 integrally attached to the elevator car 103 or an elevator door 104 located on a landing 125 of the elevator system 101, or both. The elevator door 104 opens to allow passengers to enter and exit the elevator car 103. The elevator system 101 further includes a "safety chain". Accordingly, activating the elevator safety chain can cuts power to the elevator motor and elevator brakes to bring the elevator car 103 to a safe stop in the event of some detected failure or safety-related condition.

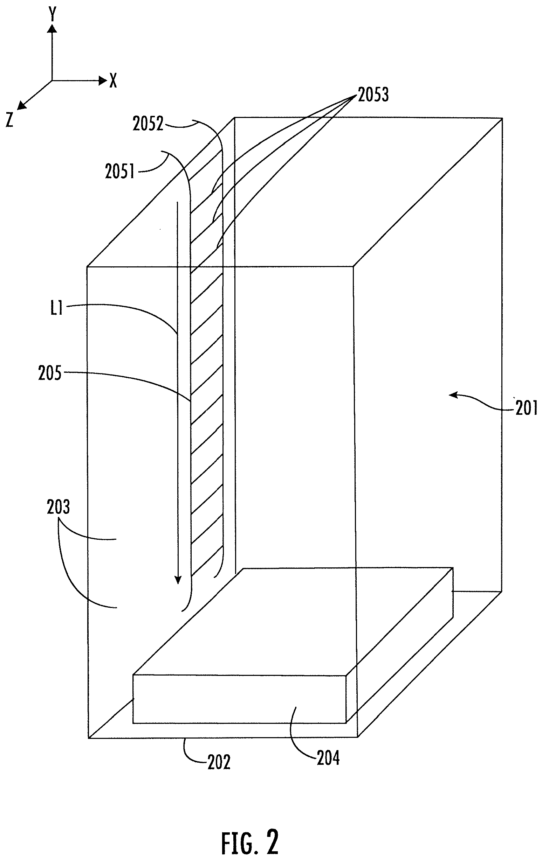

With continued reference to FIG. 1 and with additional reference to FIG. 2, a bottom portion of the elevator shaft 117 of elevator system 101, which is below the lowest one of the landings 125, is provided as an elevator pit 201. The elevator pit 201 can include a base 202, four surrounding elevator pit walls 203, a base part 204, and an elevator pit ladder 205. The elevator pit ladder 205 extends from an upper portion of the elevator pit 201 to a lower portion of the elevator pit 201 and allows a service technician or mechanic (hereinafter referred to as a "mechanic") to access the elevator pit 201. The elevator pit ladder 205 is adjacent to one of the elevator pit walls 203 and includes vertical members 2051, 2052 and rungs 2053 extending between the vertical members 2051, 2052. When a mechanic is inside the elevator pit 201 or standing on the elevator pit ladder 205 (i.e., standing on one of the rungs 2053 of the elevator pit ladder 205), the elevator car 103 should typically be removed from the elevator pit 201 and generally prevented from entering the elevator pit 201 except in cases of certain maintenance procedures. Although a single pit room associated with a single elevator is shown, it should be appreciated that the teachings of the present disclosure can be applied to an elevator system with other elevator pit layouts. For example, the elevator system can include duplex pit layouts, triplex pit layouts, etc., in which the pit area may be be bounded not by four walls, but could be three walls or two walls due to the shared space with adjacent elevator cars.

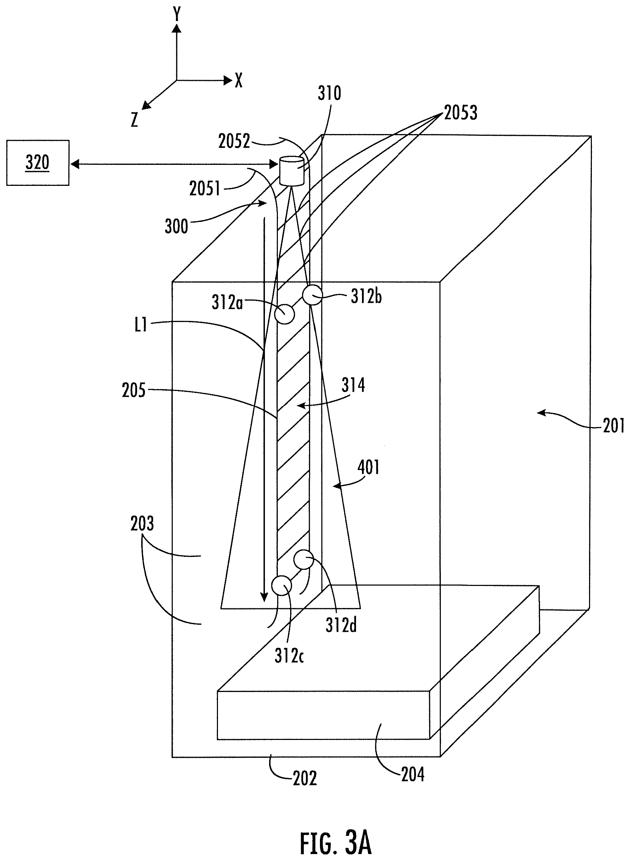

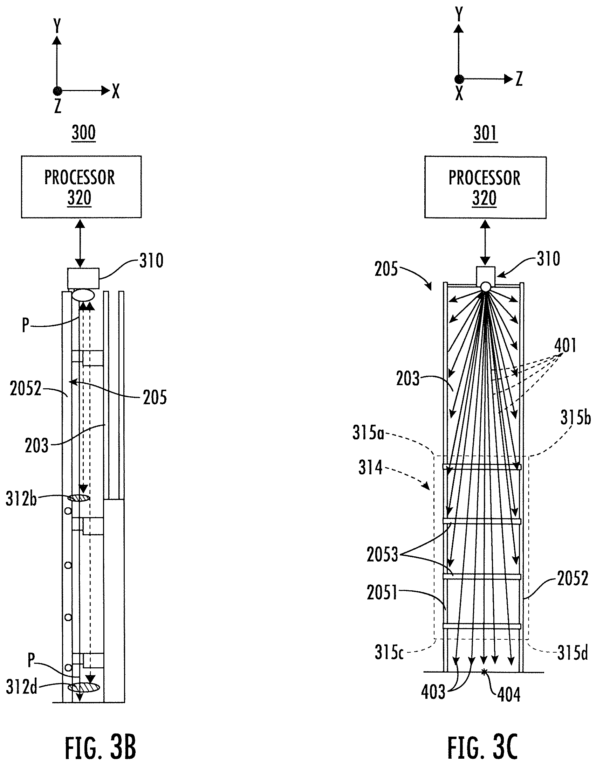

Turning now to FIGS. 3A, 3B and 3C, a retroreflective elevator safety net configuration system 300 for configuring an elevator pit ladder safety net system 301 (see FIG. 3C) is illustrated according to a non-limiting embodiment of the present disclosure. The elevator pit ladder safety net system 301 is provided to reliably identify whether a mechanic or another person is standing or supported on the elevator pit ladder 205 in the elevator pit 201 so that appropriate safety action can be taken to insure safety. The safety action can include, but is not limited to, generating an alert (e.g., sound alert, light alert, etc.) and/or disabling the elevator system 101. As described herein, disabling the elevator system can include, but is not limited to, opening an electrical relay that opens (i.e., disconnects) the elevator safety chain and drops power to the elevator motor and/or elevator brake.

The retroreflective elevator safety net configuration system 300 and the safety net system 301 both include a sensor 310 and a processor 320. In one or more non-limiting embodiments, the same sensor 310 and processor 320 can be utilized by the retroreflective elevator safety net configuration system 300 and the safety net system 301. The sensor 310 is implemented as an active remote sensor 310 (e.g., a LiDAR sensor) and is arranged in a plane (P) defined between the elevator pit ladder 205 and the one of the elevator pit walls 203. The sensor 310 is configured to perform sensing to sense an object, which is disposed along the plane (P), and to generate data corresponding to results of the sensing. Although a single sensor 310 is shown, it should be appreciated that additional sensors 310 can be implemented without departing from the scope of the present disclosure.

The processor 320 includes a processing unit, a memory, an input/output (I/O) unit by which the processor 320 is communicative with the sensor 310, and at least a main controller (e.g., controller 115). The memory has executable instructions and software stored thereon, which are readable and executable by the processing unit. When the processor 320 reads and executes the executable instructions and/or software, the processor 320 is commanded to operate as described herein. In accordance with embodiments, the executable instructions and/or software may include a machine-learning algorithm, which improves certain operations of the processing unit over time. The processor 320 can be remote from the sensor 310 or local. In the former case, the processor 320 can be operably coupled to the sensor 310 via a wired connection or via a wireless connection. In the latter case, the processor 320 can be built into the sensor 310 or provided as a separate component from the sensor 310 and operably coupled to the sensor 310 via a wired connection or via a wireless connection. In one or more non-limiting embodiments, processor 320 can also read car motion status from a switch or a controller (e.g., controller 115) to determine if the elevator car 103 is moving. If so, the elevator system 101 can perform a "disable" reaction when a person is detected, an/or an alert can be generated.

According to a non-limiting embodiment, the processor 320 can be initiated to operate in a configuration mode and a monitoring mode. When operating in the configuration mode, the processor 320 controls operates the retroreflective elevator safety net configuration system 300 to configure the elevator safety net system 301 and to define and set a spatial region of interest (e.g., an AOI) to be monitored (see e.g., FIGS. 3A and 3B). Once the elevator safety net system 301 is configured, t the monitoring mode of the processor 320 can be initiated so as to monitor the set AOI (see e.g., FIG. 3C) defined in the configured mode. It should be appreciated that although an AOI is described, the spatial region of interest can be a volume of interest (VOI) to be monitored when the active remote sensor outputs IR energy to define a 3D space or 3D FOV.

In accordance with embodiments, the sensor 310 can include or be provided as one or more of a light detection and ranging or a laser imaging, detection, and ranging (LiDAR) sensor, a radio detection and ranging (RADAR) sensor, infrared (IR) sensors, and/or a camera. In accordance with further embodiments, the sensor 310 can be provided as one or more of a two-dimensional (2D) LiDAR sensor, a three-dimensional (3D) LiDAR sensor, a millimeter wave RADAR sensor and/or a red, green, blue, depth (RGBD) camera. In accordance with still further embodiments, the sensor 310 can be provided as plural sensors including a combination of one or more sensor types listed herein.

With continued reference to FIGS. 3A and 3B, the retroreflective elevator safety net configuration system 300 further includes one or more retroreflective markers 312a, 312b, 312c and 312d (collective referred to as retroreflective markers 312). Although four retroreflective markers 312 are shown, it should be appreciated that more or less retroreflective markers 312 can be utilized without departing from the scope of the present disclosure. The retroreflective markers 312 can be implemented as passive retroreflective markers 312 or active retroreflective markers 312. The passive retroreflective markers 312 employ glass or plastic reflective beads embedded in a reflective material, which directs incoming IR pulses 401 output from the 2D LiDAR sensor 310 back along the same path from which they originated, i.e., back toward the 2D LiDAR sensor 310. The active retroreflective markers 312 can be powered (e.g., from a local power source, battery, etc.) to emit its own IR signal. The IR signal 401 can be constantly output, or can be output upon receiving a pulse from the 2D LiDAR sensor 310 to mimic the operation of the passive retroreflective markers 312.

The IR pulses 401 returned by the retroreflective markers 312 have a greater energy level or intensity than energy reflected by objects appearing in the field of view of the sensor 310. In a non-limiting embodiment, the sensor 310 can generate an alert (e.g., a sound alert, a light alert, a haptic alert, etc.) in response to receiving the IR pulses 401 returned by the retroreflective markers 312. Accordingly, a technician or mechanic can adjust sensor 310 and/or the retroreflective markers 312 to confirm the intended dimensions of an AOI 314 is achieved.

The difference in energy level or intensity allows the processor 320 (e.g., software) to distinguish between the IR energy reflected from the retroreflective markers 312 and energy reflected by the other objects appearing in the field of view of the sensor 310. In this manner, the processor 320 can identify the specific locations of the retroreflective markers 312 and store those locations in memory. The stored locations can then be utilized by the processor 320 to determine the AOI 314 defined within the plane (P). According to a non-limiting embodiment, the processor 320 (e.g., the software) can monitor and alert of objects located in the AOI 314 (e.g., the spatial region of interest) defined by the stored locations of the retroreflective markers 312 while disregarding objects located outside the AOI 314.

The retroreflective markers 312 can be removably coupled to a surface or point of interest (POI) using various coupling components such as a clamp, bracket, strap, tie, adhesive, etc. In one or more non-limiting embodiments, the coupling component can adjust a respective retroreflective marker with respect to the surface at which it is coupled. In the example illustrated in FIGS. 3A and 3B, an upper pair (e.g., first pair) of retroreflective markers 312a and 312b are coupled to upper portions of the vertical members 2051 and 2052, respectively. Likewise, a lower pair (e.g., second pair) of retroreflective markers 312c and 312d are coupled to lower portions of the vertical members 2051 and 2052, respectively.

In the example shown in FIGS. 3A and 3B, the upper pair of retroreflective markers 312a/312b are adjusted to extend from the vertical members 2051 and 2052 toward the pit wall 203 at a first distance, while the lower pair of retroreflective markers 312c/312d are adjusted to extend from the vertical members 2051 and 2052 toward the pit wall 203 at a second distance that is greater than the first distance. The differences in distances allow the lower pair of retroreflective markers 312c/312d to reflect the IR pulses 401 output from the sensor 310 without being blocked by the upper pair of retroreflective markers 312a/312b. In this manner, the detected locations of the upper pair of retroreflective markers 312a/312b and the lower pair of retroreflective markers 312c/312d define the AOI 314 defined within the plane (P) to be monitored by a configured elevator pit ladder safety net system 301 (see FIG. 3C).

In another embodiment, a single retroreflective marker 312 can be used to define the AOI 314. In this scenario, the retroreflective marker 312 can be arranged at a POI and IR energy from the sensor 310 can then be delivered toward the retroreflective marker 312. The processor 320 can then determine the location of the retroreflective marker 312 based on the reflected IR energy and store the location of the retroreflective marker 312. The retroreflective marker 312 can then be moved to another POI and the process repeated until a desired AOI 14 is defined and stored in the memory of the processor 320.

FIG. 3C is a front view of the elevator pit ladder 205 following configuration of the elevator pit ladder safety net system 301 using the retroreflective elevator safety net configuration system 300. Although the retroreflective markers 312 are shown as being removed, it should be appreciated that the retroreflective markers 312 can be maintained without departing the scope of the invention. Once configurated, the elevator pit ladder safety net system 301 can be initiated such that the 2D LiDAR sensor 310 emits IR energy 401 (e.g., laser pulses) within a field of view 311 that extends along the entire length (L1) of the elevator pit ladder 205 and covers the AOI 314. In this example, the AOI 314 is defined within a 2D plane (P). The AOI 314 extends from upper AOI corners 315a/315b to lower AOI corners 315c/315d, and extends a distance between elevator pit ladder 205 and the elevator pit wall 203. For example, the plane (P) can be about 50-100 mm behind the elevator pit ladder 205, between the elevator pit ladder 205 and the elevator pit wall 203. It should be appreciated that although a 2D plane (P) is described, a 3D space can be monitored when implementing the sensor 310 as, for example, a 3D LiDAR sensor.

After configuring the elevator pit ladder safety net system 301, the sensor 310 operates to output IR energy to generate point cloud data using a single scan for image processing, multiple scans for image processing and/or multiple successive or continuous scans for video processing. According to a non-limiting embodiment, the processor 320 can generate an alert when an object or person is located in the AOI 314, while disregarding objects located outside of the AOI 314. In this manner, instances of false positive detections of objects located outside the AOI 314 can be reduced or even eliminated.

The processor 320 is operably coupled to the sensor 310 and is configured to analyze the point cloud data and determine whether the point cloud data is indicative of a person standing on the pit ladder 205 within the AOI 314 based on analysis results. The processor 320 can then communicate the analysis results with at least the controller 115 of the elevator system 101 so that the controller 115 can act, such as by preventing the elevator car 103 from entering the elevator pit 201. In response to determining a person is located in the AOI 314, for example, the processor 320 and/or the controller 115 can open an electrical relay in the elevator safety chain, which removes power to the motor and zeros out the elevator car motor power and/or drops the machine brake of the elevator car 103.

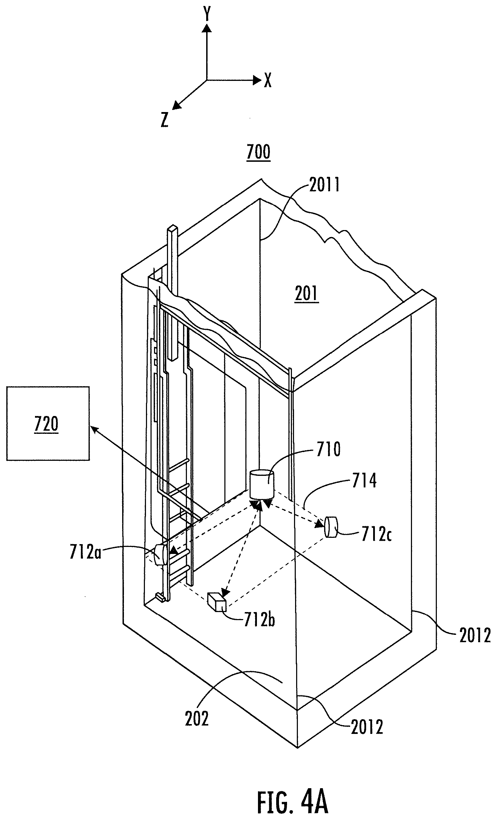

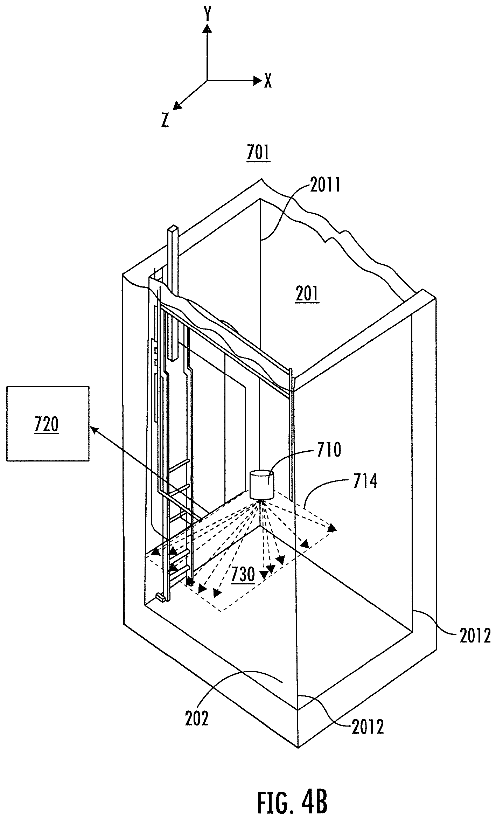

Turning now to FIGS. 4A and 4B, a retroreflective elevator safety net configuration system 700 for configuring an elevator pit safety net system 701 (see FIG. 4B) is illustrated according to a non-limiting embodiment of the present disclosure. The elevator pit safety net system 701 is provided to reliably identify whether an object, mechanic or another person is standing in the elevator pit 201 so that appropriate action can be taken to insure safety. The retroreflective elevator safety net configuration system 700 includes a sensor 710, a processor 720, and one or more one or more retroreflective markers 712a, 712b and 712c (collective referred to as retroreflective markers 712). Although four retroreflective markers 712 are shown, it should be appreciated that more or less retroreflective markers 712 can be utilized without departing from the scope of the present disclosure. The sensor 710, the processor 720 and the retroreflective markers 712 operate the same, or substantially the same, to the sensor 310, the processor 320 and the retroreflective markers 312 implemented in the retroreflective elevator safety net configuration system 300. Therefore, detailed operations of the sensor 710, the processor 720 and the retroreflective markers 712 will not be repeated for the sake of brevity.

In this example, the sensor 710 is a 2D LiDAR sensor that is disposed in a corner of the elevator pit 201 via a coupling components (e.g., a clamp, a bracket, a strap, a tie, adhesive, a tripod, a stand, etc.) and is configured to sense the plane as a 2D plane extending away from the corner along a substantial portion of the area of the bottom of the elevator pit 201. The plane can be about 18-24" above the base 202. As described herein, the sensor 710 is configured to generate IR energy (e.g., laser pulses) which reflects off of objects located in the plane. Although a 2D plane is described, a 3D space can be monitored when implementing the sensor 710 as, for example, a 3D LiDAR sensor.

The retroreflective markers 712 are disposed (e.g., via a clamp, a bracket, a strap, a tie, adhesive, a tripod, a stand, etc.) at points of interest within the elevator pit 201. As described herein, the processor 720 can identify the specific locations of the retroreflective markers 712 and store those locations in memory. The stored locations can then be utilized by the processor 720 to determine the AOI 714 defined within the plane. According to a non-limiting embodiment, the processor 720 (e.g., the software) can monitor and alert of objects located in the AOI 714 defined by the stored locations of the retroreflective markers 712 while disregarding objects (e.g., elevator car belts, cables, ropes, etc.) located behind the AOI 714.

After configuring the elevator pit safety net system 701, the processor 320 can be initiated into the monitoring mode as shown in FIG. 4B. Accordingly, the sensor 710 is configured to output IR energy, which is utilized by the elevator pit safety net system 701 to sense an object or person located in the elevator pit 201 to generate data corresponding to results of the sensing. The processor 720 is operably coupled to the sensor 710 and is configured to analyze the data and to determine whether the data is indicative of a person located within the AOI 714 based on analysis results. Although the retroreflective markers 712 are shown as being removed, it should be appreciated that the retroreflective markers 712 can be maintained without departing the scope of the invention.

The detected reflected energy produces point cloud data using a single scan for image processing, multiple scans for image processing and/or multiple successive or continuous scans for video processing. The processor 720 is configured to analyze the point cloud data to determine whether the point cloud data is indicative of a person located in the AOI 714 defined within the elevator pit 201.

While the non-limiting embodiments of FIGS. 3A-3C and 4A-4B are described above as being separate from one another, it is to be understood that this is not required and that the embodiments of FIGS. 3A-3C and the embodiments of FIGS. 3A-3C and 4A-4B can be combined in various combinations. For example, sensor 310 can be provided as a single 2D LiDAR sensor with a field of view that captures a front area of an elevator pit a mechanic must go through to enter the elevator pit and sensor 710 can be provided as a set of two 2D LiDAR sensors in opposite corners of a pit area with fields of views that capture most or all of the areas the mechanic might stand in the elevator pit. The elevator safety net configuration systems 300 and 700 are also not limited to the elevator pit 201, but instead can be employed in other critical safety areas of the elevator system 101 such as, for example, the handrails located at the top of the elevator car 103, and areas of the machine room such as virtual machine guarding around motor, sheaves, ropes and belts. The safety net configuration systems described herein are also not limited to elevator systems, but can be employed in other types of conveyance systems including, but not limited to, escalator systems and moving walkways. Additional sensing in these or other cases can include three-dimensional (3D) sensing, alternate sensing (mmWave or RGB-D cameras), two or more sensors, coverage of different plans with 2D sensors and ranges of data/image processing approaches, including but not limited to image classification, machine learning, pattern recognition, etc.

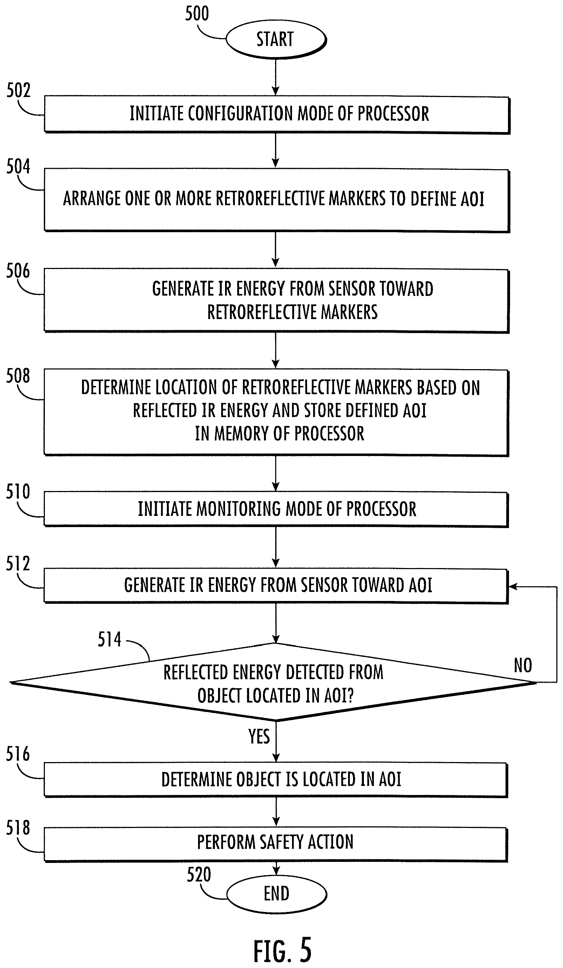

Referring now to FIG. 5, a method of configuring an elevator safety net system using a retroreflective elevator safety net configuration system is illustrated according to a non-limiting embodiment of the present disclosure. The method begins at operation 500, and a configuration mode (e.g., of processor 320) is initiated at operation 502. At operation 504 one or more retroreflective markers are arranged to define a spatial region of interest (e.g., an AOI) within a FOV of the sensor, and IR energy generated from a sensor (e.g., a LiDAR) is directed toward the retroreflective markers disposed within the FOV at operation 506. At operation 508, the location of the retroreflective markers are determined based on the reflected IR energy and the AOI defined by the location of the retroreflective markers is stored in the memory of the processor.

Turning to operation 510, a monitoring mode (e.g., of the processor) is initiated. At operation 512, IR energy generated from the sensor is directed toward the AOI. At operation 514, a determination is made as to whether reflected energy that is reflected from an object located in the AOI is detected by the sensor. When no reflected energy is detected, the IR energy from the sensor continues to be generated to monitor the AOI. When the reflected energy is detected, however, an object is determined to be located in the AOI at operation 518. At operation 518 and a safety action (e.g., generate an alert and disable the elevator system) is performed, and the method ends at operation 520.

As described herein, a retroreflective elevator safety net configuration system provides various technical effects and benefits including reduced time installing an elevator safety net system and improved quality when monitoring an AOI. The retroreflective elevator safety net configuration system described herein can also be used to configure an elevator safety net system to monitor a specific AOI within a 2D plane or 3D space, while disregarding objects located outside the AOI. In this manner reduced false negatives and/or false positives can be achieved.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A virtual safety net configuration system comprising:
an active remote sensor configured to output energy within field of view (FOV) and to detect the energy reflected from an object located in the FOV;
one or more markers arranged within the FOV to define a spatial region of interest, the one or more markers configured to reflect the energy having a first energy intensity to the active remote sensor; and
a processor in signal communication with the active remote sensor, the processor configured to determine the spatial region of interest within the FOV based at least in part on the reflected energy having the first energy intensity.

2. The virtual safety net configuration system of claim 1, wherein locations of the one or more markers are stored in memory accessible by the processor, and wherein the processor determines a profile of the spatial region of interest based on the locations stored in the memory.

3. The virtual safety net configuration system of claim 1 or 2, wherein the processor disregards energy reflected from an object located outside the spatial region of interest, and performs a safety action in response to detecting energy reflected from an object located within the spatial region of interest.

4. The virtual safety net configuration system of claim 3, wherein the safety action includes one or both of generating an alert and activating an elevator safety chain.

5. The virtual safety net configuration system of any of claims 1 to 4, wherein the active remote sensor outputs the energy along a two-dimensional plane and the spatial region of interest is an area of interest (AOI) within the FOV of the active remote sensor; and/or
wherein the active remote sensor outputs the energy along a three-dimensional space and the spatial region of interest is an volume of interest (VOI) within the FOV of the active remote sensor.

6. The virtual safety net configuration system of any of claims 1 to 5, wherein the active remote sensor and the one or more markers are coupled to a pit ladder included in an elevator system, the one or more markers configured to be maintained or removed after the locations of the markers are stored in the memory.

7. The virtual safety net configuration system of claim 6, wherein the pit ladder is located in the FOV, and wherein the one or more markers define the spatial region of interest that includes a targeted portion of the pit ladder.

8. The virtual safety net configuration system of any of claims 1 to 6, wherein the active remote sensor and the one or more markers are disposed in an elevator pit included in an elevator system; and/or wherein the elevator pit is located in the FOV, and wherein the one or more markers define the spatial region of interest that includes a targeted portion of the elevator pit that is less than an entire portion of the elevator pit.

9. A method of configuring a virtual safety net system using a safety net configuration system, the method comprising:
arranging one or more markers within the FOV to define a spatial region of interest, the one or more markers configured to reflect energy having a first energy intensity;
outputting energy from an active remote sensor within field of view (FOV), and detecting the energy having the first energy intensity reflected from an object located in the FOV; and
determining, by a processor in signal communication with the active remote sensor, the spatial region of interest within the FOV based at least in part on the reflected energy having the first energy intensity.

10. The method of claim 9, further comprising:
storing locations of the one or more markers in memory accessible by the processor; and
determining a profile of the spatial region of interest based on the locations stored in the memory.

11. The method of claim 9 or 10, further comprising:
disregarding energy reflected from an object located outside the spatial region of interest; and
performing a safety action in response to detecting energy reflected from an object located within the spatial region of interest; and/or
wherein the safety action includes one or both of generating an alert
and activating an elevator safety chain.

12. The method of any of claims 9 to 11, further comprising outputting from the active remote sensor the energy along a two-dimensional plane such that the spatial region of interest is an area of interest (AOI) within the FOV of the active remote sensor; and/or
further comprising outputting from the active remote sensor the energy along a three-dimensional space such that the spatial region of interest is an volume of interest (VOI) within the FOV of the active remote sensor.

13. The method of any of claims 9 to 12, further comprising coupling the active remote sensor and the one or more markers to at least one of a pit ladder, handrails located at a top of an elevator car, and a machine guarding area included in an elevator system; and/or
wherein the pit ladder is located in the FOV, and wherein the one or more markers define the spatial region of interest that includes a targeted portion of the pit ladder.

14. The method of any of claims 9 to 13, further comprising disposing the active remote sensor and the one or more markers in an elevator pit included in an elevator system.

15. The method of claim 14, wherein the elevator pit is located in the FOV, and wherein the one or more markers define the spatial region of interest that includes a targeted portion of the elevator pit that is less than an entire portion of the elevator pit.
